# FASCICULE DE BREVET EUROPEEN

(11) **EP 3 234 332 B1**
(45) Date de publication et mention de la délivrance du brevet: **15.04.2020**
(21) Numéro de dépôt: 15820230.9
(22) Date de dépôt: 16.12.2015
(51) Int. Cl.: F02K 9/86, F02K 9/97

(54) **DISPOSITIF DE MODULATION DE SECTION D'ÉJECTION DE GAZ**
VORRICHTUNG ZUR MODULATION EINES GASAUSSTOSSABSCHNITTS
DEVICE FOR MODULATING A GAS EJECTION SECTION

(30) Priorité: 17.12.2014 FR 1402886
(43) Date de publication de la demande: 25.10.2017
(73) Titulaire: ArianeGroup SAS, 75015 Paris (FR)
(72) Inventeur: CAUBET, Pascal, F-33160 Saint Medard en Jalles (FR); LARRIEU, Jean-Michel, F-33460 Macau (FR); RIPOL, Pierre, F-33320 Eysines (FR)
(74) Mandataire: Cabinet Beau de Loménie
(86) Numéro de dépôt international: PCT/FR2015/053542
(87) Numéro de publication internationale: WO 2016/097602

(56) Documents cités:
- WO-A1-95/14163
- KR-B1- 101 372 858
- US-A- 3 230 704
- US-A- 3 329 089

## Description

### Arrière-plan de l'invention

La présente invention se rapporte au domaine général des propulseurs ou moteurs-fusées destinés à délivrer une poussée pour le pilotage d'engins tels que des missiles, des lanceurs ou encore des satellites, en utilisant le principe de propulsion par réaction ou par éjection de gaz. Elle vise plus précisément, mais non exclusivement, les tuyères équipant des propulseurs à propergol solide.

Un propulseur à propergol solide est principalement constitué d'une enveloppe renfermant un bloc de propergol, d'un allumeur et d'une tuyère à divergent fixe. Le bloc de propergol est percé par un canal situé dans l'axe du propulseur qui sert de chambre de combustion. L'allumeur met le feu au propergol à une extrémité de l'enveloppe et la combustion du propergol se propage de l'avant vers l'arrière du propulseur. Le propergol brûle à une vitesse prédéfinie en produisant des gaz de combustion qui sont expulsés par la tuyère.

La section de col de la tuyère permet de réguler la combustion du bloc de propergol de manière à maintenir la pression souhaitée dans la chambre de combustion tout en produisant la poussée attendue. Aussi, dans le cas d'un propulseur délivrant une poussée à débit unique, la section de col de la tuyère est unique et prédéterminée en fonction du niveau de poussée souhaité.

Cependant, le recours à une section de col unique n'est pas adapté à un propulseur ayant deux régimes de fonctionnement, typiquement un fonctionnement à haut débit (accélération) et un fonctionnement à bas débit (croisière) ou à un propulseur destiné à voler à des altitudes variables.

Pour pallier un tel inconvénient, une solution connue consiste à doter le lanceur de deux propulseurs distincts : un pour la phase d'accélération (« boost ») et un autre pour la phase de croisière. Cependant, une telle solution a comme inconvénient d'augmenter significativement le coût du lanceur.

Il est également connu de munir une tuyère d'une section de col variable. En pratique, un pointeau mobile en translation est logé à l'intérieur de la tuyère. La position de ce pointeau dans l'écoulement des gaz de combustion permet de déterminer la section de passage des gaz qui sortent de la tuyère et ainsi d'ajuster la section d'éjection des gaz au régime de fonctionnement du propulseur.

Cependant, les systèmes de positionnement connus associés au pointeau mobile sont des systèmes complexes, couteux et qui augmentent significativement la masse du propulseur.

Or, il existe un besoin pour réaliser de manière économique une modulation de section d'éjection dans une tuyère de manière à optimiser le coefficient de poussée, et ce tout en minimisant l'encombrement et la masse du dispositif de modulation dans le propulseur. Le document WO95/14163 divulgue un dispositif de modulation de section d'éjection de gaz selon le préambule de la revendication 1.

### Objet et résumé de l'invention

Ce but est atteint grâce à un dispositif de modulation de section d'éjection de gaz destiné à être placé dans une tuyère en amont du col de ladite tuyère, le dispositif de modulation comprenant :
- un pointeau s'étendant entre une extrémité amont et une extrémité aval, ladite extrémité aval ayant un diamètre décroissant formant un organe d'obturation partiel pour le col de tuyère,
- un guide de pointeau comprenant un logement interne dans lequel l'extrémité amont du pointeau est présente,
l'extrémité amont dudit pointeau étant apte à coulisser dans le logement interne du guide du pointeau entre une première position dans laquelle l'extrémité amont du pointeau est présente dans une partie amont du logement interne et une deuxième position dans laquelle l'extrémité amont est présente dans une partie aval du logement interne, l'extrémité amont du pointeau étant maintenue dans la première position par au moins un élément de retenue apte à se rompre sous l'effet de la chaleur, l'élément de retenue correspondant à une goupille traversant à la fois l'extrémité amont du pointeau et la paroi du guide de pointeau.

Le dispositif de modulation de section d'éjection de gaz de l'invention propose une solution simple, à faible coût et peu encombrante permettant de définir deux modes de fonctionnement pour une tuyère, à savoir un premier mode de fonctionnement à haut débit dans lequel l'organe d'obturation partiel est en retrait axial par rapport au col de la tuyère et un second mode de fonctionnement à bas débit dans lequel l'organe d'obturation partiel est plus avancé axialement par rapport au col. Le passage du premier mode de fonctionnement au deuxième mode de fonctionnement est réalisé par rupture du ou des éléments de retenue. L'utilisation d'un ou plusieurs éléments de retenue fusibles en combinaison avec un pointeau et un guide de pointeau permet de définir une architecture économique, simple et fiable pour des tuyères à variation de section de col, et ce sans augmenter significativement la masse et l'encombrement du propulseur.

En outre, le dispositif de modulation de section d'éjection de gaz de l'invention permet de s'affranchir de l'utilisation de deux propulseurs distincts (un propulseur pour la phase d'accélération (« boost ») et un autre propulseur pour la phase de croisière) et, par conséquent, de proposer à faible coût un système de propulsion permettant deux régimes de fonctionnement.

Selon une première caractéristique du dispositif de modulation de section d'éjection de gaz de l'invention, le ou les éléments de retenue sont en un matériau apte à se rompre à partir d'une température déterminée.

L'invention a également pour objet une tuyère à section de col variable comprenant un col de tuyère caractérisée en ce qu'elle comprend en outre un dispositif de modulation de section d'éjection de gaz selon l'invention, ledit dispositif de modulation étant placé dans la tuyère en amont dudit col de tuyère.

Selon une caractéristique particulière de la tuyère de l'invention, celle-ci est de type aerospike, c'est-à-dire une tuyère fonctionnant sans divergent, ce qui diminue à la fois le coût, la masse et l'encombrement du propulseur tout en permettant d'optimiser la poussée de l'engin quelle que soit l'altitude de fonctionnement.

L'invention a encore pour objet un propulseur comprenant une tuyère à section de col variable selon l'invention.

Selon une caractéristique particulière du propulseur de l'invention, celui-ci comprend une enveloppe renfermant un chargement de propergol, la tuyère à section de col variable étant reliée au fond arrière de ladite enveloppe par une rallonge ou une liaison articulée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A et 1B sont des vues schématiques en perspective et en coupe partielle d'un propulseur équipé d'une tuyère aerospike intégrant un dispositif de modulation de section d'éjection de gaz conformément à un mode de réalisation de l'invention ;
- les figures 2A et 2B sont des vues schématiques en coupe longitudinale de la tuyère des figures 1A et 1B ;
- les figures 3A et 3B sont des vues schématiques en coupe longitudinale d'une tuyère aerospike intégrant un dispositif de modulation de section d'éjection de gaz conformément à un autre mode de réalisation de l'invention ;
- les figures 4A et 4B sont des vues schématiques en coupe longitudinale d'une tuyère aerospike intégrant un dispositif de modulation de section d'éjection de gaz conformément à un autre mode de réalisation de l'invention ;
- la figure 5A est une vue schématique en perspective montrant un pointeau utilisé dans le dispositif de modulation de section d'éjection de gaz représenté sur les figures 5B et 5C ;
- les figures 5B et 5C sont des vues schématiques en coupe longitudinale d'une tuyère aerospike intégrant un dispositif de modulation de section d'éjection de gaz conformément à un autre mode de réalisation de l'invention ;
- les figures 6A et 6B sont des vues schématiques en coupe longitudinale partielle d'une tuyère aerospike intégrant un dispositif de modulation de section d'éjection de gaz conformément à un autre mode de réalisation de l'invention ;
- les figures 7A et 7B sont des vues schématiques en coupe longitudinale partielle d'une tuyère aerospike intégrant un dispositif de modulation de section d'éjection de gaz conformément à un autre mode de réalisation de l'invention.

### Description détaillée de l'invention

Le dispositif de modulation de section d'éjection de gaz de l'invention peut être utilisé avec tout type de tuyère, en particulier avec des tuyères comportant un divergent ou non.

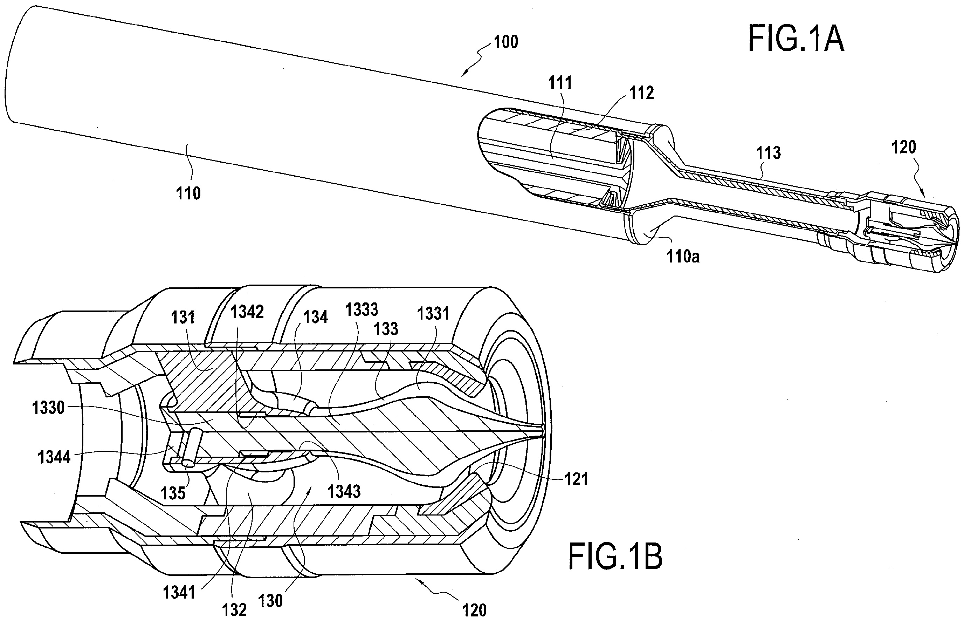

La figure 1A illustre schématiquement en coupe longitudinale la partie arrière d'un propulseur 100 comprenant une enveloppe 110 de révolution entourant une chambre de combustion 111 dans laquelle est logé un bloc de propergol solide 112. La chambre 111 s'ouvre à travers le fond arrière 110a de l'enveloppe 110 en amont d'une tuyère 120 de type « aerospike ». Par tuyère « aerospike », on entend ici une tuyère pratiquement dépourvue de divergent et qui comprend un pointeau à profil convexe pouvant émerger au niveau de son col. Dans le mode de réalisation décrit ici, la tuyère 120 est reliée au fond arrière 110a par une rallonge 113. Toutefois, selon une variante de réalisation d'un propulseur selon l'invention, la tuyère 120 peut être également directement connectée au fond arrière de l'enveloppe du propulseur, c'est-à-dire sans la rallonge 113. Selon encore une autre variante de réalisation du propulseur selon l'invention, la tuyère peut être reliée au fond arrière de l'enveloppe du propulseur par une liaison articulée, telle qu'une rotule par exemple, de manière à permettre l'orientation de la tuyère dans plusieurs directions par rapport à l'axe de l'enveloppe du propulseur.

Conformément à l'invention, un dispositif de modulation de section d'éjection de gaz 130 est disposé à l'intérieur de la tuyère 120 du col 121 de la tuyère 120 (figure 1B). Dans l'exemple décrit ici, le maintien en position du dispositif de modulation 130 est assuré par deux bras 131 et 132 fixés sur la paroi interne de la tuyère 120. Les bras 131 et 132 sont disposés à 180° l'un de l'autre, le reste de l'espace circonférentielle présent autour du dispositif de modulation étant laissé libre pour permettre aux gaz issus de la chambre de combustion 111 de s'écouler vers le col de tuyère 121. Le dispositif de modulation de section d'éjection de gaz 130 comprend un pointeau 133 comprenant une tige 1333 s'étendant entre une extrémité amont 1330 et une extrémité aval 1331, ladite extrémité aval 1331 ayant un diamètre décroissant formant un organe d'obturation partiel pour le col de tuyère 121. Le dispositif de modulation 130 comprend également un guide de pointeau 134 comprenant une paroi 1342 délimitant un logement interne 1341 dans lequel l'extrémité amont 1330 du pointeau 133 est présente. Le guide de pointeau 134 comprend en outre un passage 1343 supportant la tige 1333 du pointeau et guidant ses mouvements.

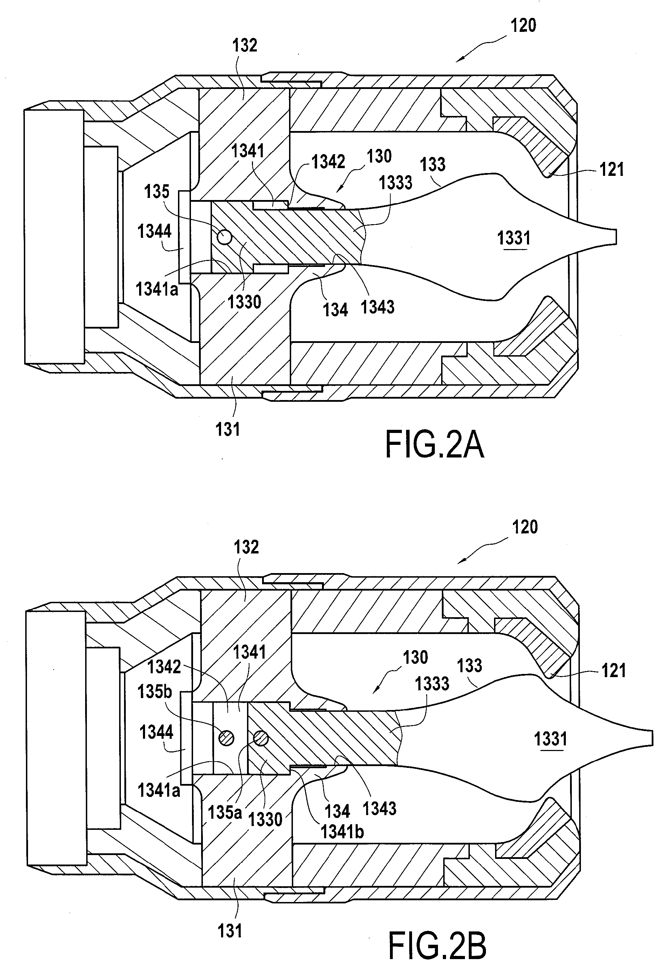

Comme illustré sur les figures 2A et 2B, l'extrémité amont 1330 du pointeau peut coulisser dans le logement interne 1341 du guide du pointeau 134 entre une première position dans laquelle ladite extrémité amont 1330 du pointeau 133 est présente dans une partie amont 1341a du logement interne 1341 (figure 2A) et une deuxième position dans laquelle l'extrémité amont 1330 est présente dans une partie aval 1341b du logement interne 1341 (figure 2B).

Conformément à l'invention, l'extrémité amont 1330 du pointeau 133 est maintenue dans la première position par un élément de retenue, ici une goupille 135 qui traverse à la fois l'extrémité amont 1330 du pointeau et la paroi 1342 du guide de pointeau 134. Dans le mode de réalisation décrit ici, la goupille 135 est réalisée en un matériau apte à céder, par fusion ou ramollissement, à partir d'une température déterminée. A titre d'exemples :
- pour une température de libération du pointeau déterminée autour de 85°C, la goupille 135 peut notamment être réalisée en ABS (Acrylonitrile Butadiène Styrène),
- pour une température de libération du pointeau déterminée autour de 400°C, la goupille 135 peut notamment être réalisée en aluminium,
- pour une température de libération du pointeau déterminée supérieure à 800°C, la goupille 135 peut notamment être réalisée en un alliage métallique à mémoire de forme.

Les alliages à mémoire de forme peuvent être utilisés d'une manière générale pour réaliser le ou les éléments de retenue du dispositif de l'invention, leur composition étant déterminée en fonction de la température de libération du pointeau visée.

Durant la première phase de vol du propulseur, dite phase d'accélération, le dispositif de modulation de section d'éjection de gaz 130 se trouve dans la configuration représentée sur la figure 2A, configuration dans laquelle l'extrémité aval 1331 du pointeau 133 est en retrait du col de tuyère 121 afin de générer une forte poussée et s'adapter au niveau d'altitude rencontré dans cette première phase de vol. Lors de cette première phase de vol, les gaz de combustion circulant dans la tuyère 120 vont transmettre de la chaleur à la goupille 135. Une fois la température de rupture de la goupille 135 atteinte (température de fusion ou de ramolissement), celle-ci perd son intégrité mécanique et ne joue plus son rôle d'élément de retenue de l'extrémité amont 1330 du pointeau 133 qui, sous l'effet d'aspiration des efforts de pression générés dans la tuyère, se déplace (translation) dans la position illustrée sur la figure 2B. Une première partie 135a de la goupille 135 reste alors dans l'extrémité amont 1330 du pointeau tandis qu'une deuxième partie 135b reste dans la paroi 1342 du guide de pointeau. La configuration illustrée sur la figure 2B correspond à la deuxième phase de vol du propulseur, dite phase de croisière, configuration dans laquelle l'extrémité aval 1331 du pointeau 133 se rapproche du col de tuyère 121 afin de générer une poussée réduite adaptée aux besoins systèmes de cette deuxième phase de vol.

Dans le mode de réalisation décrit ici, la partie amont 1341a du logement interne 1341 est fermée par un bouchon 1344 réalisé en un matériau dont la conductivité thermique permet de retarder la transmission de la chaleur des gaz à la goupille et, par conséquent, l'instant auquel la goupille se rompt. Le bouchon peut être notamment réalisé en matériau composite carbone/carbone (C/C) comprenant une texture de renfort en fibres de carbone densifiée par une matrice de carbone pyrolytique (pyrocarbone), en matériau composite à matrice céramique basse densité (CMC) comprenant une texture de renfort en fibres réfractaires (carbone ou céramique) densifiée par une matrice au moins partiellement céramique ou en matériau composite à matrice organique (CMO) comprenant une texture de renfort en fibres réfractaires (carbone ou céramique) densifiée par une matrice organique (résine). Toutefois, le dispositif de modulation peut également être utilisé sans fermeture de la partie amont 1341a du logement interne 1341.

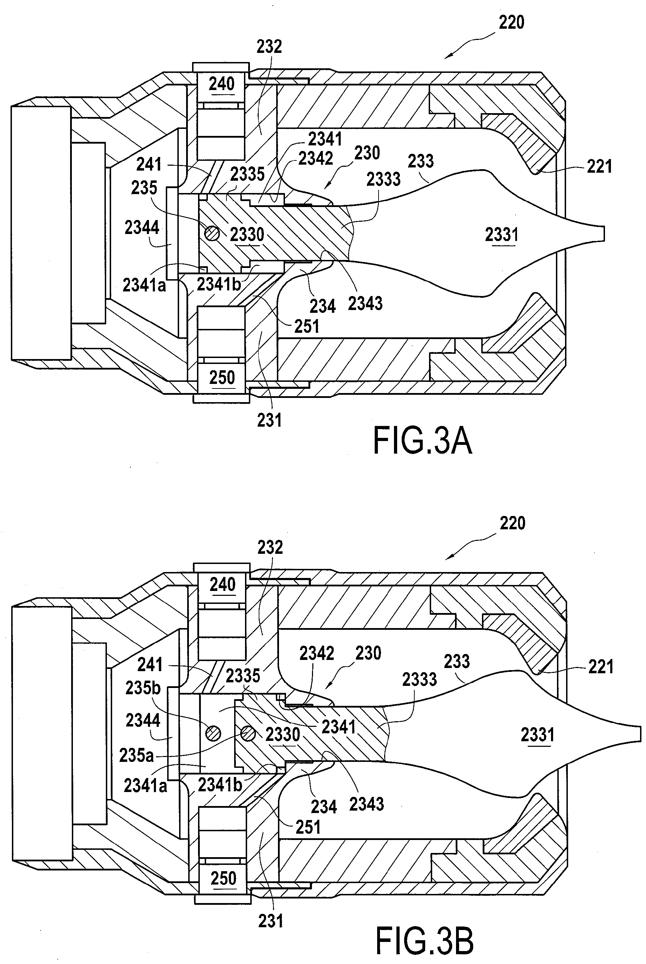

Les figures 3A et 3B illustrent une tuyère 220 qui comprend un dispositif de modulation de section d'éjection de gaz 230 conformément à un autre mode de réalisation de l'invention. Le dispositif de modulation 230 diffère du dispositif 130 décrit précédemment en ce que la goupille 235 qui traverse à la fois l'extrémité amont 2330 du pointeau et la paroi 2342 du guide de pointeau 234 ne cède plus sous l'effet de la chaleur mais d'un effort mécanique exercé sur l'extrémité amont 2330 du pointeau. Plus précisément, comme illustré sur la figure 3A, l'extrémité amont 2330 du pointeau 233 comporte un épaulement 2335 en contact avec la paroi 2342 du guide de pointeau 234 délimitant le logement interne 2341 dans lequel l'extrémité amont 2330 du pointeau 233 est présente. Le dispositif de modulation de section d'éjection de gaz 230 comprend en outre un générateur de gaz, ici une cartouche pyrotechnique 240 logée dans le bras 232 du dispositif de modulation. La cartouche pyrotechnique 240 est apte à envoyer sur commande un gaz sous pression dans la partie amont 2341a du logement interne 2341 entre le fond amont 2344 dudit logement interne et l'épaulement 2335 de manière à rompre la goupille 235 et à faire coulisser l'extrémité amont 2330 du pointeau 233 vers la partie aval 2341b du logement interne 2341. La cartouche pyrotechnique 240 communique avec le logement interne 2341 via un conduit 241 ménagé dans le guide de pointeau 234 entre le bras 232 et le logement interne 2341. La goupille 235 est dimensionnée de manière à rompre sous l'effort de pression exercé par la cartouche pyrotechnique 240. La gouille 235 peut être notamment réalisée en aluminium ou en acier.

Durant la première phase de vol du propulseur, dite phase d'accélération, le dispositif de modulation de section d'éjection de gaz 230 se trouve dans la configuration représentée sur la figure 3A, configuration dans laquelle l'extrémité aval 2331 du pointeau 233 est en retrait du col de tuyère 221 afin de générer une forte poussée et s'adapter au niveau d'altitude rencontré dans cette première phase de vol.

Une fois la première phase de vol terminée, un signal de commande est envoyé à la cartouche pyrotechnique 240 pour sa mise à feu. Sous l'effet de la pression du gaz introduit par la cartouche 240 dans la partie amont 2341a du logement interne 2341 entre le fond amont 2344 dudit logement interne et l'épaulement 2335, la goupille 235 se rompt, une première partie 235a de la goupille 235 restant alors dans l'extrémité amont 2330 du pointeau tandis qu'une deuxième partie 235b reste dans la paroi 2342 du guide de pointeau. En cédant, la goupille 235 libère l'extrémité amont 2330 du pointeau 233 qui, sous l'effet combiné des efforts de pression exercés par la cartouche pyrotechnique et des gaz circulant dans la tuyère, se déplace (translation) dans la position illustrée sur la figure 3B. La configuration illustrée sur la figure 3B correspond à la deuxième phase de vol du propulseur, dite phase de croisière, configuration dans laquelle l'extrémité aval 2331 du pointeau 233 se rapproche du col de tuyère 221 afin de générer une poussée réduite adaptée aux besoins systèmes de cette deuxième phase de vol.

De manière optionnelle et comme représenté sur les figures 3A et 3B, le dispositif de modulation de section d'éjection de gaz 230 peut en outre comprendre un deuxième générateur de gaz, ici une deuxième cartouche pyrotechnique 250 qui est, dans le mode de réalisation décrit ici, logée dans l'autre bras 231 du dispositif de modulation 230. La deuxième cartouche pyrotechnique 250 est apte à envoyer sur commande un gaz sous pression dans la partie aval 2341b du logement interne 2341 entre le fond aval dudit logement interne comportant le passage 2343 supportant la tige 2333 du pointeau 233 et l'épaulement 2335. La cartouche pyrotechnique 250 communique avec le logement interne 2341 via un conduit 251 ménagé dans le guide de pointeau 234 entre le bras 232 et le logement interne 2341. Lorsqu'un signal de commande est envoyé à la cartouche pyrotechnique 250 pour sa mise à feu alors que le dispositif de modulation 230 est dans la configuration illustrée sur la figure 3B, le pointeau 233 se déplace (translation) alors dans la position illustrée sur la figure 3A sous l'effet de la pression introduite par la cartouche 250 entre l'épaulement 2335 et le fond aval du logement interne 2341.

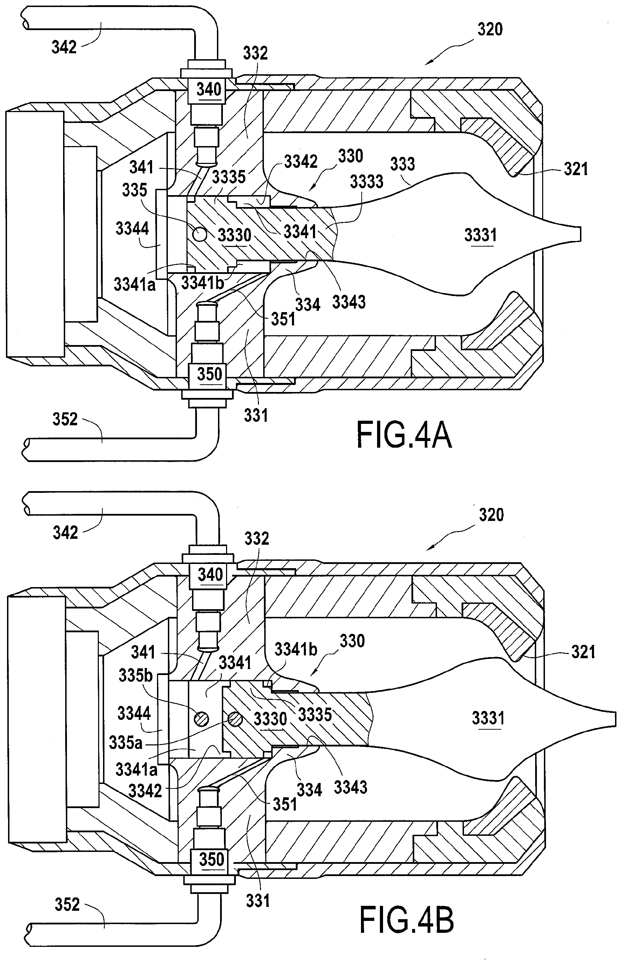

Les figures 4A et 4B illustrent une tuyère 320 qui comprend un dispositif de modulation de section d'éjection de gaz 330 conformément à un autre mode de réalisation de l'invention. Le dispositif de modulation 330 diffère du dispositif 230 décrit ci-avant en ce qu'il utilise du gaz directement issu des gaz de combustion du propulseur plutôt que des générateurs de gaz indépendants pour rompre la goupille 335 qui traverse à la fois l'extrémité amont 3330 du pointeau et la paroi 3342 du guide de pointeau 334.

Plus précisément, comme illustré sur la figure 4A, l'extrémité amont 3330 du pointeau 333 comporte un épaulement 3335 en contact avec la paroi 3341 du guide de pointeau 334 délimitant le logement interne 3342 dans lequel l'extrémité amont 3330 du pointeau 333 est présente. Le dispositif de modulation de section d'éjection de gaz 330 comprend en outre une vanne 340 logée dans le bras 332 du dispositif de modulation. La vanne 340 est reliée à un conduit 342 qui débouche dans une partie du propulseur où une fraction des gaz de combustion peut être prélevée comme par exemple dans la chambre de combustion (non représentée sur les figures 4A et 4B). La vanne 340 est apte à envoyer sur commande une fraction des gaz de combustion dans la partie amont 3341a du logement interne 3341 entre le fond amont 3344 dudit logement interne et l'épaulement 3335 de manière à rompre la goupille 335 et à faire coulisser l'extrémité amont 3330 du pointeau 333 vers la partie aval 3341b du logement interne 3341. La vanne 340 communique avec le logement interne 3341 via un conduit 341 ménagé dans le guide de pointeau 334 entre le bras 332 et le logement interne 3341. La goupille 335 est dimensionnée de manière à rompre sous l'effort de pression exercé par la fraction de gaz introduite dans le logement interne 3341 via le conduit 341.

Durant la première phase de vol du propulseur, dite phase d'accélération, le dispositif de modulation de section d'éjection de gaz 330 se trouve dans la configuration représentée sur la figure 4A, configuration dans laquelle l'extrémité aval 3331 du pointeau 333 est en retrait du col de tuyère 321 afin de générer une forte poussée et s'adapter au niveau d'altitude rencontré dans cette première phase de vol.

Une fois la première phase de vol terminée, un signal de commande est envoyé à la vanne 340 pour son ouverture. Sous l'effet de la pression du gaz introduit par la vanne 340 dans la partie amont 3341a du logement interne 3341 entre le fond amont 3344 dudit logement interne et l'épaulement 3335, la goupille 335 se rompt, une première partie 335a de la goupille 335 restant alors dans l'extrémité amont 3330 du pointeau tandis qu'une deuxième partie 335b reste dans la paroi 3342 du guide de pointeau. En cédant, la goupille 335 libère l'extrémité amont 3330 du pointeau 333 qui, sous l'effet combiné des efforts de pression exercés par la fraction de gaz de combustion introduite dans le logement interne du guide de pointeau et des gaz circulant dans la tuyère, se déplace (translation) dans la position illustrée sur la figure 4B. La configuration illustrée sur la figure 4B correspond à la deuxième phase de vol du propulseur, dite phase de croisière, configuration dans laquelle l'extrémité aval 3331 du pointeau 333 se rapproche du col de tuyère 321 afin de générer une poussée réduite adaptée aux besoins systèmes de cette deuxième phase de vol.

De manière optionnelle et comme représenté sur les figures 4A et 4B, le dispositif de modulation de section d'éjection de gaz 330 peut en outre comprendre une deuxième vanne 350 qui est dans le mode de réalisation décrit ici logée dans le deuxième bras 332 du dispositif de modulation 330. La deuxième vanne 350 est reliée à un conduit 352 qui débouche dans une partie du propulseur où une fraction des gaz de combustion peut être prélevée comme par exemple dans la chambre de combustion (non représentée sur les figures 4A et 4B). La deuxième vanne 350 est apte à envoyer sur commande une fraction des gaz de combustion dans la partie aval 3341b du logement interne 3341 entre le fond aval dudit logement interne comportant le passage 3343 supportant la tige 3333 du pointeau 333 et l'épaulement 3335.

La vanne 350 communique avec le logement interne 3341 via un conduit 351 ménagé dans le guide de pointeau 334 entre le bras 332 et le logement interne 3341. Lorsqu'un signal de commande est envoyé à la vanne 350 pour son ouverture alors que le dispositif de modulation 330 est dans la configuration illustrée sur la figure 4B, le pointeau 333 se déplace (translation) alors dans la position illustrée sur la figure 4B sous l'effet de la pression introduite par la cartouche 350 entre l'épaulement 3335 et le fond aval du logement interne 3341.

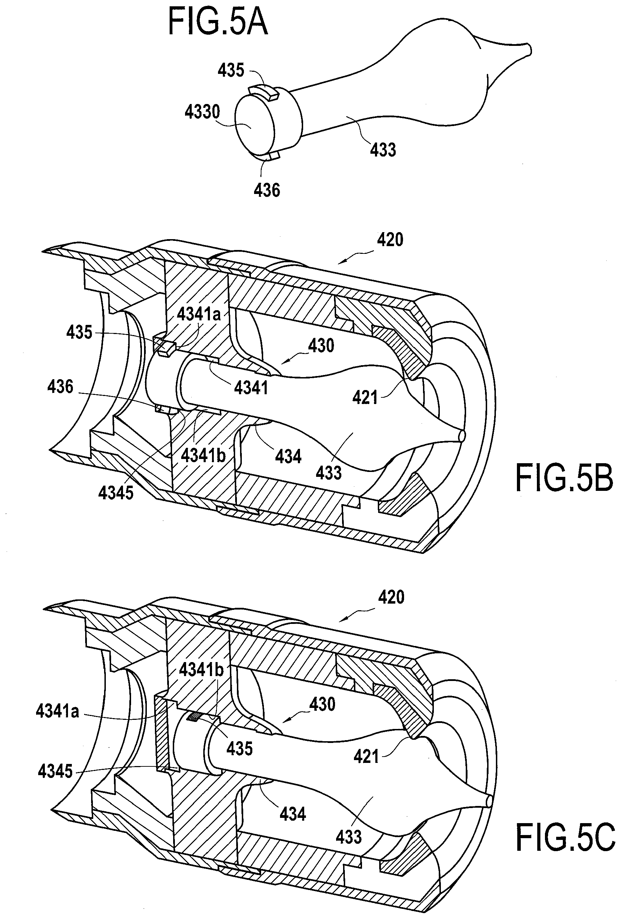

Dans les modes de réalisation décrits ci-avant, l'élément de retenue est constitué par une goupille. Toutefois, la réalisation de l'élément de retenue dans la présente invention n'est pas limitée à une goupille et peut présenter une forme et/ou une structure différente. Selon une variante de réalisation illustrée sur les figures 5A, 5B et 5C, un pointeau 433 comporte sur son extrémité amont 4330 deux clavettes 435 et 436 formant des éléments de retenue. Dans ce cas, le logement interne 4341 du guide de pointeau 434 du dispositif de modulation de section d'éjection de gaz 430 comprend une partie amont 4341a apte à loger l'extrémité amont 4330 du pointeau 433 avec ses deux clavettes 435 et 436 et une partie aval 4341b présentant des dimensions réduites par rapport à la partie amont 4341a de manière à définir une butée 4345 pour les clavettes 435 et 436. Ainsi, lors de la première phase de vol, le pointeau 433 est maintenu en retrait du col de tuyère 421 comme illustré sur la figure 5B afin de générer une forte poussée et s'adapter au niveau d'altitude rencontré dans cette première phase de vol. Une fois la première phase vol terminée, les clavettes 435 et 436 sont rompues, soit par la chaleur, soit par un effort de pression comme déjà décrit ci-avant. En cédant, les clavettes 435 et 436 libèrent l'extrémité amont 4330 du pointeau 433 qui avance alors dans la partie aval 4341b du logement 4341 permettant au pointeau de se placer dans la position illustrée sur la figure 5C, position dans laquelle l'extrémité aval 4331 du pointeau 433 se rapproche du col de tuyère 421 afin de générer une poussée réduite adaptée aux besoins systèmes de cette deuxième phase de vol.

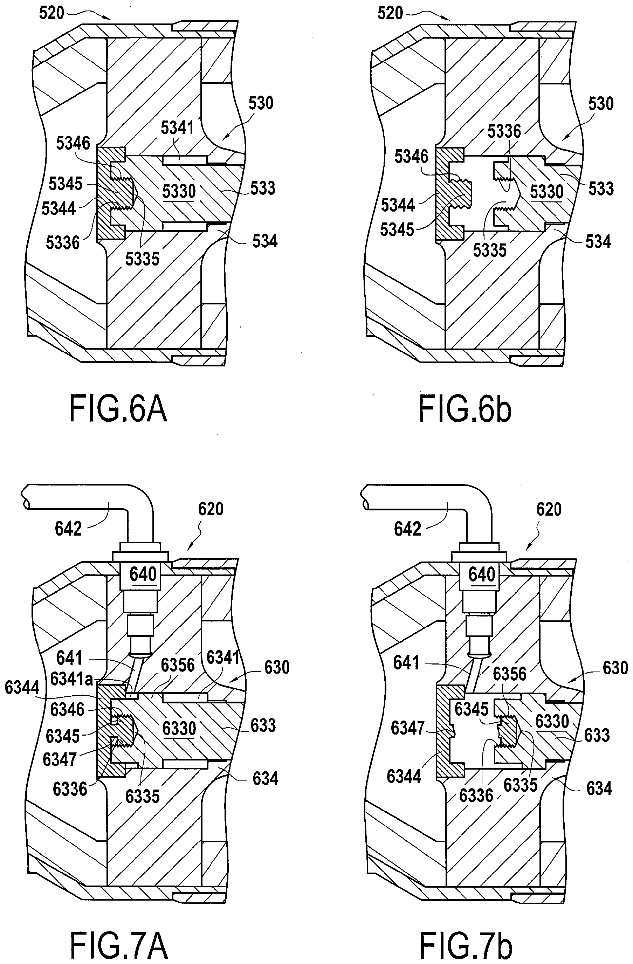

Les figures 6A et 6B illustrent une autre variante de réalisation d'un élément de retenue qui peut être utilisé dans le dispositif de modulation de section d'éjection de gaz de l'invention. Sur la figure 6A, une tuyère 520 du même type que celles déjà décrites précédemment comprend un dispositif de modulation de section d'éjection de gaz 530 qui comprend un pointeau 533 et un guide de pointeau 534, l'élément de retenue du pointeau étant ici intégré à un bouchon 5344 fermant la partie amont du logement interne 5341 du dispositif 530. Plus précisément, le bouchon 5344 comporte, sur sa partie en regard de l'extrémité amont 5330 du pointeau, une tige 5345 comportant un filetage 5346. L'extrémité amont 5330 du pointeau 533 comporte un évidement 5335 comportant un taraudage 5336 apte à coopérer avec le filetage 5346 de la tige 5345. Comme illustrée sur la figure 6A, l'extrémité amont 5330 du pointeau 533 est vissée sur la tige 5345. La tige 5345 est réalisée en un matériau apte à céder, par ramollissement ou fusion, à partir d'une température déterminée. Une fois cette température atteinte, la tige 5345 perd son intégrité mécanique et ne joue plus son rôle d'élément de retenue de l'extrémité amont 5330 du pointeau 533, le filetage 5346 ou la tige elle-même se rompant sous l'effet de la température. Sous l'effet d'aspiration des efforts de pression générés dans la tuyère, le pointeau se déplace (translation) alors dans la position illustrée sur la figure 6B. Par ailleurs, la tige 5345 peut être également dimensionnée de manière à rompre sous un effort de pression exercé par une cartouche pyrotechnique ou par introduction d'une fraction des gaz de combustion comme décrits précédemment.

Les figures 7A et 7B illustrent une autre variante de réalisation d'un élément de retenue qui peut être utilisé dans le dispositif de modulation de section d'éjection de gaz de l'invention. Sur la figure 7A, une tuyère 620 du même type que celles déjà décrites précédemment comprend un dispositif de modulation de section d'éjection de gaz 630 qui comprend un pointeau 633 et un guide de pointeau 634, l'élément de retenue du pointeau étant ici intégré à un bouchon 6344 fermant la partie amont du logement interne 6341 du dispositif 630. Plus précisément, le bouchon 6344 comporte, sur sa partie en regard de l'extrémité amont 6330 du pointeau, une tige 6345 comportant un filetage 6346. L'extrémité amont 6330 du pointeau 633 comporte un évidement 6335 comportant un taraudage 6336 apte à coopérer avec le filetage 6346 de la tige 6345. Comme illustrée sur la figure 7A, l'extrémité amont 6330 du pointeau 633 est vissée sur la tige 6345.

La tige 6345 comporte une partie rétrécie 6347 qui est apte à permettre la rupture de la tige 6345 sous un effort de pression exercé par l'introduction d'une fraction des gaz de combustion par l'intermédiaire d'une vanne 640 et via un conduit 641 comme déjà décrit ci-avant en relation avec les figures 4A et 4B. Une fois la fraction de gaz introduite dans la partie amont 6341a du logement interne 6341 entre le bouchon 6344 et l'épaulement 6356, la tige 6345 se rompt au niveau de sa partie rétrécie 6347. Sous l'effet combiné des efforts de pression exercés par la fraction de gaz de combustion introduite dans le logement interne du guide de pointeau et des gaz circulant dans la tuyère, le pointeau se déplace (translation) alors dans la position illustrée sur la figure 7B. La tige 6347 avec sa partie rétrécie peut être également réalisée en un matériau apte à se rompre, par ramollissement ou par fusion, à partir d'une température déterminée.

Le dispositif de modulation de section d'éjection de gaz de l'invention peut être utilisé dans des propulseurs, moteurs-fusées ou lanceurs à propulsion solide (propergol solide), liquide (propergol liquide) ou hybride (propergols solide et liquide).

## Revendications

1. Dispositif de modulation de section d'éjection de gaz (130) destiné à être placé dans une tuyère (120) en amont du col (121) de ladite tuyère, le dispositif de modulation comprenant :
- un pointeau (133) s'étendant entre une extrémité amont (1330) et une extrémité aval (1331), ladite extrémité aval ayant un diamètre décroissant formant un organe d'obturation partiel pour le col de tuyère (121),
- un guide de pointeau (134) comprenant un logement interne (1341) dans lequel l'extrémité amont (1330) du pointeau (133) est présente,
l'extrémité amont (1330) dudit pointeau étant apte à coulisser dans le logement interne (1341) du guide du pointeau (132) entre une première position dans laquelle ladite extrémité amont du pointeau est présente dans une partie amont (1341a) du logement interne (1341) et une deuxième position dans laquelle ladite extrémité amont est présente dans une partie aval (1341b) du logement interne (1341), le dispositif étant **caractérise en ce que** l'extrémité amont (1330) dudit pointeau (133) est maintenue dans la première position par au moins un élément de retenue (135) apte à se rompre sous l'effet de la chaleur, l'élément de retenue correspondant à une goupille traversant à la fois l'extrémité amont du pointeau et la paroi du guide de pointeau.

2. Dispositif selon la revendication 1, **caractérisé en ce que** le ou les éléments de retenue (135) sont en un matériau apte à se rompre à partir d'une température déterminée.

3. Tuyère (120) à section de col variable comprenant un col de tuyère (121) **caractérisée en ce qu'**elle comprend en outre un dispositif de modulation de section d'éjection de gaz (130) selon la revendication 1 ou 2, ledit dispositif de modulation étant placé dans la tuyère en amont dudit col de tuyère.

4. Tuyère selon la revendication 3, **caractérisée en ce qu'**elle est de type aerospike.

5. Propulseur comprenant une tuyère à section de col variable selon la revendication 3 ou 4.

6. Propulseur (100) selon la revendication 5, **caractérisé en ce qu'**il comprend une enveloppe (110) renfermant un chargement de propergol (112), la tuyère (120) à section de col variable étant reliée au fond arrière (110a) de ladite enveloppe (110) par une rallonge (113) ou une liaison articulée.

## Patentansprüche

1. Vorrichtung zur Modulation eines Gasausstoßabschnitts (130), die dazu bestimmt ist, in einer Düse (120) stromaufwärts des Halses (121) der Düse angeordnet zu werden, wobei die Modulationsvorrichtung umfasst:
- eine Nadel (133), die sich zwischen einem stromaufwärtigen Ende (1330) und einem stromabwärtigen Ende (1331) erstreckt, wobei das stromabwärtige Ende einen abnehmenden Durchmesser aufweist, der ein teilweises Verschlussorgan für den Düsenhals (121) bildet,
- eine Nadelführung (134), die ein Innengehäuse (1341) umfasst, in dem sich das stromaufwärtige Ende (1330) der Nadel (133) befindet,
wobei das stromaufwärtige Ende (1330) der Nadel in dem Innengehäuse (1341) der Nadelführung (132) zwischen einer ersten Position, in der sich das stromaufwärtige Ende der Nadel in einem stromaufwärtigen Teil (1341a) des Innengehäuses (1341) befindet, und einer zweiten Position, in der sich das stromaufwärtige Ende in einem stromabwärtigen Teil (1341b) des Innengehäuses (1341) befindet, gleiten kann, wobei die Vorrichtung **dadurch gekennzeichnet ist, dass** das stromaufwärtige Ende (1330) der Nadel (133) in der ersten Position durch mindestens ein Rückhalteelement (135) gehalten wird, das unter Wärmeeinwirkung brechen kann, wobei das Rückhalteelement einem Stift entspricht, der gleichzeitig das stromaufwärtige Ende der Nadel und die Wand der Nadelführung durchquert.

2. Vorrichtung nach Anspruch 1, **dadurch gekennzeichnet, dass** das oder die Halteelemente (135) aus einem Material hergestellt sind, das bei einer bestimmten Temperatur brechen kann.

3. Düse (120) mit variablem Halsabschnitt, umfassend einen Düsenhals (121), **dadurch gekennzeichnet, dass** sie ferner eine Vorrichtung zur Modulation eines Gasausstoßabschnitts (130) nach Anspruch 1 oder 2 umfasst, wobei die Modulationsvorrichtung in der Düse stromaufwärts des Düsenhalses angeordnet ist.

4. Düse nach Anspruch 3, **dadurch gekennzeichnet, dass** es sich um eine Düse vom Typ Aerospike handelt.

5. Triebwerk, umfassend eine Düse mit variablem Halsabschnitt nach Anspruch 3 oder 4.

6. Triebwerk (100) nach Anspruch 5, **dadurch gekennzeichnet, dass** es ein Gehäuse (110) umfasst, das eine Treibstoffladung (112) enthält, wobei die Düse (120) mit einem variablen Halsabschnitt mit dem hinteren Boden (110a) des Gehäuses (110) durch eine Verlängerung (113) oder eine Gelenkverbindung verbunden ist.

## Claims

1. A modulation device (130) for modulating a gas ejection section, the device being for placing in a nozzle (120) upstream from the throat (121) of said nozzle, the modulation device comprising:
- a plug (133) extending between an upstream end (1330) and a downstream end (1331), said downstream end having a diameter that decreases so as to form a member for partially obstructing the nozzle throat (121); and
- a plug guide (134) having an internal housing (1341) in which the upstream end (1330) of the plug (133) is present;
the upstream end (1330) of said plug being suitable for sliding in the internal housing (1341) of the plug guide (132) between a first position in which said upstream end of the plug is present in an upstream portion (1341a) of the internal housing (1341), and a second position in which said upstream end is present in a downstream portion (1341b) of the internal housing (1341), the device being **characterized in that** the upstream end (1330) of said plug (133) is held in the first position by at least one retaining element (135) suitable for breaking under the effect of heat.

2. A device according to claim 1, **characterized in that** the retaining element(s) (135) is/are made of a material suitable for breaking as from a determined temperature.

3. A nozzle (120) of variable throat section including a nozzle throat (121) and **characterized in that** it further includes a modulation device (130) according to claim 1 or claim 2 for modulating the gas ejection section, said modulation device being placed in the nozzle upstream from said nozzle throat.

4. A nozzle according to claim 3, **characterized in that** it is an aerospike type nozzle.

5. A thruster including a nozzle of variable throat section according to claim 3 or claim 4.

6. A thruster (100) according to claim 5, **characterized in that** it comprises a shell (110) containing a propellant charge (112), the nozzle (120) of variable throat section being connected to the rear end wall (110a) of said shell (110) by an extension (113) or by a hinged connection.
